(19) Europäisches Patentamt
European Patent Office
Office européen des brevets

(11) **EP 2 833 185 B1**

(12) **EUROPÄISCHE PATENTSCHRIFT**

(45) Veröffentlichungstag und Bekanntmachung des Hinweises auf die Patenterteilung:
**31.03.2021 Patentblatt 2021/13**

(51) Int Cl.:
*G02B 21/36* *(2006.01)* *H04N 5/357* *(2011.01)*
*H04N 17/00* *(2006.01)*

(21) Anmeldenummer: **14178685.5**

(22) Anmeldetag: **28.07.2014**

(54) **Verfahren zur Kalibrierung eines digitalen optischen Gerätes und optisches Gerät**

Method for calibrating a digital optical device and optical device

Procédé de calibrage d'un appareil optique numérique et appareil optique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.08.2013 DE 102013012987**

(43) Veröffentlichungstag der Anmeldung:
**04.02.2015 Patentblatt 2015/06**

(73) Patentinhaber: **Carl Zeiss Microscopy GmbH**
**07745 Jena (DE)**

(72) Erfinder:
• **Winterot, Johannes**
**07745 Jena (DE)**
• **Milde, Thomas**
**07616 Nausnitz (DE)**

• **Funck, Max**
**99423 Weimar (DE)**
• **Jabbour, Toufic**
**73431 Aalen (DE)**
• **Knoblich, Johannes**
**07747 Jena (DE)**

(74) Vertreter: **Müller, Silke**
**Carl Zeiss AG**
**Patentabteilung**
**Carl-Zeiss-Promenade 10**
**07745 Jena (DE)**

(56) Entgegenhaltungen:
EP-A1- 1 369 663 EP-A1- 2 345 920
DE-A1-102010 030 637 US-A1- 2007 211 243
US-A1- 2009 268 078

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Bildaufnahme mit Hilfe eines Digitalmikroskops. Daneben betrifft die Erfindung ein Digitalmikroskop, in welchem ein solches Verfahren implementiert ist, bzw. das für die Anwendung eines erfindungsgemäßen Verfahrens geeignet ist. Herstellungstoleranzen der optischen Baugruppen, also der Zoomsysteme und der Objektive verursachen Fehler in der Bilddarstellung, sei es die tatsächliche Vergrößerung eines Objektives oder der bestimmten Zoomstellung, eine Abweichung des Bildstandes vom Zentrum Bildverzerrungen, Farbfehler oder andere Abbildungsfehler.

Von Abbildungsfehlern spricht man dann, wenn die verschiedenen Lichtstrahlen, die von dem Objektpunkt ausgehen, nicht alle in einem Bildpunkt fokussiert werden. Die wichtigsten Abbildungsfehler sind die sphärische und die chromatische Aberration. Sphärische und chromatische Abbildungsfehler werden durch Systeme aus mehreren Linsen verschiedener Glassorten, sphärische Abbildungsfehler durch asphärische Linsen oder Gradientenlinsen korrigiert. Dem Fachmann sind weitere Korrekturmöglichkeiten bekannt, beispielsweise aplanatische Linsen, Aufspalten von Linsen zur Verringerung von Einfallswinkeln, Glassorten mit höherem Brechungsindex, Verkleinern der Pupille und andere. Eine Glasplatte (Planplatte) erzeugt beispielsweise einen Bildebenenversatz bzw. eine Unschärfe, die mit größer werdendem Öffnungswinkel zunimmt.

Die Abbildung durch Linsen ist immer mehr oder weniger fehlerbehaftet. Es entstehen beispielsweise Farbsäume oder die sogenannte Bildfeldwölbung im mikroskopischen Bild. Durch einen geschickten Aufbau der Objektive lassen sich solche Abbildungsfehler weitgehend ausschließen. Planachromate, Apochromate sind Beispiele hierfür. Bei apochromatischen Objektiven werden Farbsäume in der mikroskopischen Abbildung durch eine aufwendige Anordnung unterschiedlicher Linsen im Objektiv unterdrückt. Die Planachromaten sind so korrigiert, dass die normalerweise im mikroskopischen Bild auftretende Bildfeldwölbung eliminiert wird.

Die Planapochromaten besitzen von allen Objektiven die aufwendigste Konstruktion. Bei diesen Objektiven ist die Bildfeldwölbung, wie bei den Planachromaten, weitgehend beseitigt. Zusätzlich werden bei diesen Objektiven die normalerweise auftretenden roten und blauen Farbsäume durch die sehr aufwendige Konstruktion unterbunden. Diese Objektive sind sehr teuer und finden ihren Einsatz in erster Linie in der Farb-Mikrofotografie bei höchsten Ansprüchen.

Bei Zoomsystemen kommen Abbildungsfehler durch Zentrierdifferenzen der Zoomkonstruktion hinzu (Bildstandfehler). Auch die oben genannten Bildfehler können über den Zoombereich variieren.

Insbesondere Fertigungstoleranzen spielen ein große Rolle für die Qualität der Abbildung. Bei modular aufgebauten Digitalmikroskopen können insbesondere die Optikkomponenten Zoomsystem und Objektiv mit ihren jeweiligen Toleranzen die Abbildungsfehler summieren.

Aus der DE 102 25 193 A1 ist ein Verfahren zur Kalibrierung der Vergrößerung eines Stereomikroskops bekannt, bei dem auf der Grundlage einer Erstkalibrierung eine Kalibrierung über den gesamten Vergrößerungsbereich ableitbar sein soll. Anhand eines Objektiv-Okular-Referenzmaßpaares werden durch die Betätigung des Zooms am Mikroskop vorgegebene Ist-Vergrößerungen eingestellt. Die hierbei vorliegende Stellung der einzelnen Linsen des Zooms werden erfasst und für jede Zoomstellung wird ein Nominal-Vergrößerungswert abgespeichert. Durch rechnerischen Vergleich der Ist-Vergrößerung mit der Nominal-Vergrößerung wird ein Korrekturfaktor berechnet, welcher zur Kalibrierun des gesamten Zoom-Bereichs benutzt wird. Dies ist lediglich eine Korrektur hinsichtlich der realen Vergrößerung.

In der Digitalfotografie können Objektivverzeichnungen beispielsweise mittels Software manuell korrigiert werden, wobei umfangreiche Datenbanken für Kameras und Objektive vorhanden sein müssen. Teilweise werden Objektivkorrekturen (Verzerrungen, chromatische Aberrationen und Vignettierungen) mit der Firmware der Kameras intern durchgeführt (z.B. Sony).

Die DE 101 14 757 B4 beschreibt ein Mikroskopsystem mit einer Zoomoptik und einer Digitalkamera. In einer Korrektureinheit (PC) wird das digital fotografierte Bild in Übereinstimmung mit Bildkorrekturdaten entsprechend der jeweiligen Vergrößerung korrigiert. Dabei sind die Bildkorrekturdaten fotografische Bilddaten eines Standardhintergrundbildes. Es wird für jedes Bildelement eine exklusiv-ODER-Funktion entsprechend dem Objektbild und dem Standard-Hintergrundbild durchgeführt.

Aus der DE 10 2010 025 888 A1 ist eine Digitalkamera mit einem implementierten Verfahren zur Erstellung eines verzerrungsfreien Digitalbildes bekannt, das eine an das jeweils vorhandene Kameraobjektiv angepasste, optimale Bildentzerrung ermöglicht. Bei dem Verfahren werden Korrekturwerte für jeden Typ eines Kameraobjektives experimentell einmalig bestimmt und anschließend in allen Digitalkameras mit gleichem Objektivtyp hinterlegt. Die Verzeichnungsfunktion ist dabei abhängig von der eingestellten Brennweite und der Entfernung eines aufzunehmenden Objektes und kann als zweidimensionale Matrix aus Konstanten ermittelt und in der Digitalkamera abgelegt werden. Dabei können die Faktoren durch Interpolation aus der hinterlegten Matrix ermittelt werden.

Aus US 2008/0239107 A1 und US 2009/0268078 A1 sind Verzeichnungskorrekturverfahren für Digitalkameras bekannt, bei denen Koeffizienten in Abhängigkeit von Zoom- und Fokuseinstellungen in einer Tabelle hinterlegt sind. Bei der Korrektur werden Zwischenwerte durch Interpolation mit Polynomen höherer Ordnung ermittelt.

EP 2 345 920 A1 offenbart ein digitales Mikroskop-System mit motorisierten Antrieben für Zoom und Objektivrevolver. Sie behandelt, genau wie DE 102010 030 637 A1 das Problem, dass Vergrößerungssprünge bei Objektivwechsel auftreten. Anhand der eingestellten Vergrößerung und dem aktuell im optischen Pfad befindlichen Objektiv wird eine totale Vergrößerung berechnet. Bei Objektivwechsel wir diese durch Steuerung des Zooms wieder angepasst.

In der Digitalmikroskopie und anderen digitalen optischen Anwendungen sind häufig Objektiv und Zoomsystem untereinander konfigurierbar, wenn der Zoom nicht direkt in das Objektiv integriert ist. Das heißt, ein Zoomsystem kann mit unterschiedlichen Objektiven verwendet werden. Da sowohl Zoomsystem, als auch Objektiv unterschiedliche Abbildungsfehler verursachen, sind verschiedene Korrekturen erforderlich, um zu einer zufriedenstellenden Bildqualität zu gelangen.

Der Erfindung liegt die Aufgabe zugrunde, ein Verfahren zur Kalibrierung eines Digitalmikroskopes oder eines anderen optischen Systems anzugeben, das insbesondere den Fertigungsprozess modularer Systeme vereinfacht und bei einem Objektivwechsel eine schnelle und einfache Kalibrierung hinsichtlich verschiedener Abbildungsfehler ermöglicht.

Weiterhin soll ein Digitalmikroskop mit einer solchen Kalibrationslogistik geschaffen werden.

Die Aufgabe wird durch ein Verfahren mit den Merkmalen des Anspruchs 1 und durch ein Digitalmikroskop mit den Merkmalen des Anspruchs 8 gelöst.

Das erfindungsgemäße Verfahren verfolgt das Ziel, durch geeignete Einzelkalibrierung der modularen Bestandteile eines Digitalmikroskopes mit jeweils einem Referenzobjekt auf einfache und besonders schnelle Weise zu einem kalibrierten Gesamtsystem zu gelangen.

Voraussetzung ist die Zuordnung der Einzelkalibrationen zu beliebigen Positionen des Zoomsystems. Dies ist über den Antrieb des Zoomsystems möglich, wenn das Zoomsystem im Schrittmodus motorisiert oder codiert ist.

Das Verfahren umfasst dabei folgende Schritte:
Ermitteln von Kalibrierdaten $D_{ZRef}$ des Zoomsystems mit einem Referenzobjektiv und Speichern der Kalibrierdaten $D_{ZRef}$ in einem internen Speicher des Zoomsystems.

In einem weiteren Schritt erfolgt das Ermitteln von Kalibrierdaten $D_{ORef}$ des Objektivs mit einem Referenz-Zoomsystem und Speichern der Kalibrierdaten $D_{ORef}$ in einem internen Speicher des Objektivs. Anschließend werden die Kalibrierdaten $D_Z$ und $D_O$ durch geeignete digitaloptische Korrektur des vom Bildsensor generierten Bildes kombiniert. Das kann eine mathematische Operation sein, welche mit einer Koordinatentransformation verwandt ist.

Zunächst soll der Schritt der Ermittlung der Kalibrierdaten $D_{ZRef}$ des Zoomsystems anhand einer besonders bevorzugten Ausführungsform eines Digitalmikroskopes erläutert werden.

Das Digitalmikroskop umfasst zumindest ein Objektiv, ein (häufig oder zumeist) motorisiertes Zoomsystem, einen Bildsensor und eine Logikeinheit zur Bildverarbeitung bzw, eine Bildverarbeitungseinheit. Die Logikeinheit ist vorzugsweise gemeinsam mit dem Zoomsystem in einer so genannten Optical Engine angeordnet, wo auch eine oder mehrere Motorsteuerungen für das Zoomsystem und weitere Steuer- und Auswertekomponenten untergebracht sind. An der Optical Engine ist das Objektiv wechselbar angeordnet. Das Objektiv besitzt vorteilhafterweise einen eigenen Datenspeicher und eine elektronische Schnittstelle, über die dieser Datenspeicher ausgelesen werden kann.

Selbstverständlich umfasst das Digitalmikroskop in an sich bekannter Weise auch eine Steuereinheit zur Ansteuerung der Mikroskopkomponenten und eine Ein-/Ausgabeeinheit zur Bedienung, Bildbetrachtung und -auswertung. Dass Monitor, Tastatur und Bedienkomponenten als Ein-/Ausgabeeinheiten bei einem Digitalmikroskop auch als separate Komponenten vorhanden sein können, die an das Digitalmikroskop angeschlossen werden, versteht sich von selbst.

Ebenso verfügt das Digitalmikroskop über einen motorisiert verfahrbaren Objekttisch, ein ggf. schwenkbare Stativ, eine Beleuchtungsvorrichtung für Auflichtbeleuchtung und ggf. für Durchlichtbeleuchtung und weitere hier nicht erwähnte Komponenten.

Da Zoomsystem und Objektiv unterschiedliche optische Module mit unterschiedlichen Toleranzen und Abbildungsfehlern sind, und ggf. deren Herstellung dezentral erfolgt, bietet sich eine separate Kalibrierung an. Aber auch für einen späteren Wechsel des Objektives oder der optical engine ist das Verfahren vorteilhaft verwendbar.

Bei der Herstellung der Optical Engine (Bildverarbeitungseinheit), welche das motorisierte Zoomsystem beinhaltet, wird dessen reale Zoomkurve für definierte Motorschrittweiten ggf. mehrerer Motoren für mehrere Linsenbaugruppen bestimmt. Weiterhin erfolgt eine Ermittlung der tatsächlichen Abbildungsfehler des Zoomsystems, wie Bildstand, Blendensteuerung und Verzeichnungskorrektur und daraus schließlich die Ermittlung eines Modells zur Vergrößerungssteuerung und Bildkorrektur.
Erfindungsgemäß erfolgt diese Kalibrierung für alle neu herzustellenden Systeme anhand eines Referenzobjektives. Somit ist sichergestellt, dass jedes Zoomsystem immer gleich kalibriert ist.

Nach der Herstellung der Objektive werden diese einheitlich an einem Referenz-Zoomsystem kalibriert. Dabei wird eine reale Vergrößerung in Kombination mit dem Referenzzoomsystem ermittelt.

Vorteilhaferweise werden auch Kalibrierdaten des Referenz-Zoomsystems mit dem Referenzobjektiv erfasst und gespeichert.

Wird später das Objektiv im Digitalmikroskop gewechselt, kann anhand der gespeicherten Kalibrierungsdaten des Zoomsystems eine verkürzte Neukalibrierung unter Verwendung der auf dem Objektiv gespeicherten Kalibrierungsdaten und der bekannten Referenzdaten erfolgen.

Anhand der Kalibrierung an jeweils einem Referenzobjekt ist eine Erstkalibrierung bei Montage des optischen Systems sehr einfach.

Die Vorteile der Erfindung sind insbesondere darin zu sehen, dass beliebige System auch mit beliebig vielen Objektiven kombinierbar und kalibrierbar sind, so dass eine Produktion der modularen Komponenten dezentral erfolgen kann und trotzdem eine gleichbleibende und qualitativ hochwertige Kalibrierung sichergestellt ist.

Der Kalibrierungsvorgang selbst kann natürlich entsprechend der Bedürfnisse variiert und angepasst werden.

Die Erfindung wird nachfolgend für eine besonders bevorzugte Ausführungsform anhand der Figuren näher erläutert. Dabei zeigen:

Fig. 1:  eine schematische Darstellung eines Zoomsystems mit beweglichen Linsengruppen in verschiedenen Stellungen;

Fig. 2:  eine schematische Darstellung verschiedener Referenzmuster;

Fig. 3:  eine erste Kalibrierungslogistik mit einem Referenzzoomsystem und einem Referenzobjektiv;

Fig. 4:  eine zweite Kalibrierungslogistik mit einem Referenzzoomsystem und einem beliebigen Objektiv;

Fig. 5:  eine dritte Kalibrierungslogistik mit einem beliebigen Zoomsystem und einem Referenzobjektiv;

Fig. 6:  eine vierte Kalibrierungslogistik mit einem beliebigen Objektiv an einem beliebigen Zoomsystem.

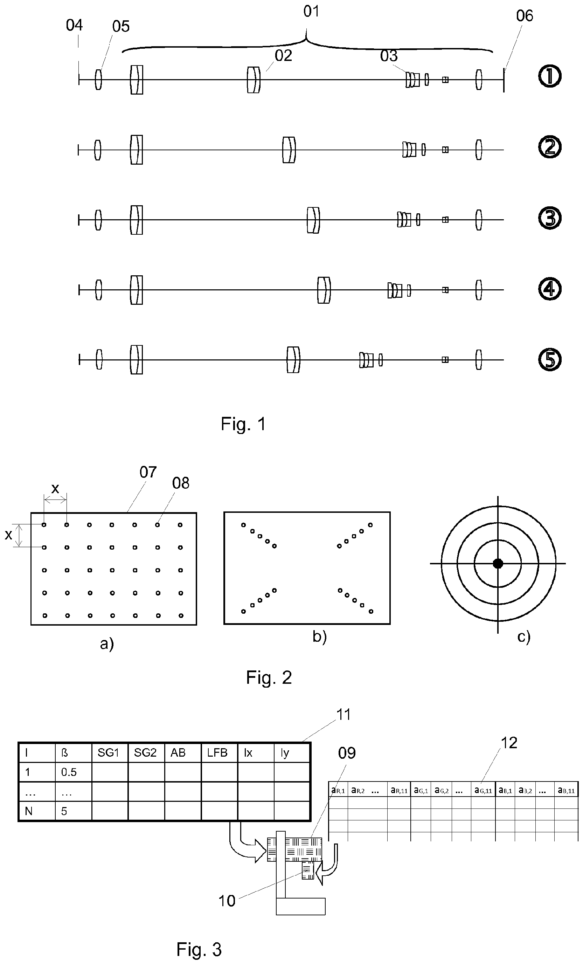

Fig. 1 zeigt in schematischer Darstellung ein Zoomsystem 01 mit zwei beweglichen und einer festen Linsengruppe in verschiedenen Stellungen. Eine erste bewegliche Linsengruppe 02 dient zunächst der Fokuseinstellung, während eine zweite Linsengruppe 03 den Vergrößerungsfaktor $\beta$ einstellt. Die Linsengruppen 02, 03 sind mittels nicht dargestellten Schrittmotoren in kleinsten Schritten verfahrbar. Im Betrieb des Digitalmikroskopes gib es fixe Zoomtabellen, in denen jeweils Motorstellungen der beiden Linsengruppen gespeichert sind. Beide Motoren werden vorzugsweise gleichzeitig verfahren, um besonders schnell zu einer gewünschten Zoomeinstellung zu gelangen. In an sich bekannter Weise ist das Zoomsystem 01 in dem Strahlengang von einem Objekt 04, über ein Objektiv 05, das Zoomsystem 01 bis zu einem Bildsensor 06 angeordnet.

Zur Ermittlung von Kalibrierdaten $D_Z$ des Zoomsystems 01 mit einem Referenzobjektiv wird in einer bevorzugten Ausführungsform des Verfahrens zunächst in einem montierten Digitalmikroskop das Objektiv (z.B. ein 5x0.3 Objektiv mit eingebauter Objektebene) ausschließlich mit Zoombewegungen nahe einer hohen Vergrößerung (mit der ersten Linsengruppe 02) fokussiert.

Die hier beschriebene eingebaute Objektebene ist eine mechanische Vorrichtung, mit der ein Referenzobjekt im Arbeitsabstand vor dem Objektiv 05 platziert werden kann.

Anschließend wird das Objektiv 05 gegen ein Referenzobjektiv 06 gleicher Bauart und Vergrößerung (auch Goldenes Objektiv genannt) ausgetauscht, ohne den Zoom zu bewegen.

Nachfolgend wird ein tatsächlicher Bildmittelpunkt auf der Sensorfläche (Invarianzpunkt) ermittelt, welcher aufgrund der nicht justierten Sensormontage und Zentriertoleranzen der Optik vom Sensormittelpunkt sowohl in der absoluten Lage, als auch in der Orientierung abweichen kann. Dieser Bildmittelpunkt ist besonders für Zoomfahren von Bedeutung, damit das Bild exakt aus einem Punkt heraus gezoomt (und hinein) dargestellt wird. Vorteilhafterweise wird anhand zweiter Zoomstellungen das Bildzentrum anhand eines Referenzmusters ermittelt und die Abweichung entlang der Zoomfahrt minimiert. Einen besonders stabilen Bildmittelpunkt erhält man, wenn man zwei weit entfernte Zoomstellungen (also größte und kleinste Vergrößerung) verwendet. Zur Bestimmung des Bildmittelpunktes kann als Referenzobjekt beispielsweise ein Fadenkreuz oder ein Diagonalmuster (Fig. 2c, 2b) verwendet werden. Der Invarianzpunkt wird als Mittelpunkt der für die Kalibration auszuwertenden Sensorfläche gewählt. Seine Projektion auf die Objektebene soll dann dem Mittelpunkt der Kalibrationsmuster Fig. 2 entsprechen.

Zur Bestimmung einer Zoomkurve werden nacheinander vorzugsweise neun Zoomstellungen angefahren und der Fokus eingestellt. Dargestellt sind hier nur fünf Zoomstellungen ① bis ⑤. Die Einstellung kann beispielsweise dadurch geschehen, dass mittels der zweiten beweglichen Linsengruppe 03 eine Zoomstellung angefahren wird und mit der ersten beweglichen Linsengruppe 02 ein Referenzmuster fokussiert wird. Dazu kann ein in Fig. 2a dargestelltes Rasterreferenzobjekt 07 verwendet werden, welches ggf. in so vielen Größen vorzuhalten ist, wie Zoomstellungen angefahren werden sollen. Alternativ kann ein sehr fein gerastertes Referenzobjekt verwendet werden, wenn sichergestellt ist, dass in jeder Zoomeinstellung die benötigten Abweichungswerte ermittelt werden können.

Das Rasterreferenzobjekt 07 ist im dargestellten Beispiel eine Lochmaske mit Löchern 08, die in definierter Größe in äquidistanten Abständen x als Reihen und Spalten auf einer Platte angeordnet sind. Aus den bekannten Abständen x der Löcher 08 auf dem Rasterreferenzobjekt 07 und der Darstellung auf dem Bildsensor 06 ist eine tatsächlich eingestellte Vergrößerung β errechenbar. Diese kann auch bereits eine Verzeichnungskorrektur beinhalten, welche später näher erläutert wird.

Außer der Bestimmung der Zoomkurve wird vorzugsweise auch ein Verzeichniskorrekturmodell ermittelt, mit dessen Hilfe Farb- und Verzerrungsfehler der Optik digital korrigiert werden können.

Das Ergebnis der Bestimmung der Zoomkurve ist also eine Tabelle, in der für vorzugsweise neun verschiedene Zoomstufen Vergrößerungen β, Motorpositionen und ggf. Korrekturkoeffizienten für Verzeichnung und Bildstand (für ein Zoomsystem am goldenen Objektiv) gespeichert sind.

Zur Kalibrierung der Objektive werden diese an einem Referenz-Zoomsystem verwendet, die realen Objektivdaten bestimmt und eine Verzeichniskorrektur vorgenommen.

Bei der Verzeichnungskorrektur wird aus einer Referenztabelle ein Verzeichnungsmodell gebildet, indem aus Lagefehlervektoren in verschiedenen Zoomstellungen Polynome höherer Ordnung interpoliert und elf Lagefehlerkoeffizienten je Farbkanalreferenzbild ermittelt werden. Zusätzlich können Bildstandfehlerkoeffizienten ermittelt werden, sowie Zoommotorpositionen zu zugehörigen Vergrößerungen erfasst und im Verzeichnungsmodell gespeichert werden.

Das Verzeichnungsmodell, das heißt die Koeffizienten, Vergrößerungen und ggf. weitere Werte werden in einer verkürzten Zoomtabelle gespeichert. Diese verkürzte Zoomtabelle umfasst vorzugsweise vier Zeilen und enthält Koeffizienten von Ausgleichspolynomen vorzugsweise dritten Grades, welche die Berechnung der genannten Werte zu beliebigen Vergrößerungen ermöglichen.

Die verkürzte Zoomtabelle kann durch Verwendung folgender Polynome für jede beliebige Vergrößerung ß erweitert werden:

Zu jeder Zoomposition i ist die Größe der Koeffizienten der Verzeichnung zu bestimmen. Zu jeder Zoomposition i gehört eine Vergrößerung ß. Aus ß ist deren Größe mit Hilfe der Einträge der verkürzten Zoomtabelle zu bestimmen.

Dabei gilt für die Verzeichnungskorrekturkoeffizienten a:

$$a_{m,n}\big(i(\beta)\big) = a_{m,n}(i^0 = 1) + a_{m,n}(i^0 = 2) * \beta + a_{m,n}(i^0 = 3) * \beta^2 + a_{m,n}(i^0 = 4) * \beta^3 \,;$$

wobei m für die drei Farbkanäle Rot, Grün, Blau steht und n jeweils Werte von 1 bis 11 annimmt;
und für Bildstandskorrekturkoeffizienten I:

$$I_m\big(i(\beta)\big) = I_m(i^0 = 1) + I_m(i^0 = 2) * \beta + I_m(i^0 = 3) * \beta^2 + I_m(i^0 = 4) * \beta^3 \,;$$

wobei m Koordinatenwerte X und Y annimmt, und
wobei i0=1...3, die Werte der reduzierten Zoomtabelle sind.

Es kommen insgesamt verschiedene Kalibrierungs-Prozesse zur Anwendung.

Zunächst wird ein Referenz-Zoomsystem 09 mit einem Referenzobjektiv 10 justiert (Fig. 3). Die Referenzsysteme sind in den Figuren zur besseren Erkennbarkeit schraffiert dargestellt. Dazu werden Kalibrationsmasken für die Zoomkurve, die Verzeichniskorrektur und die Bildstandskorrektur abgebildet und bei der Verarbeitung der Bilddaten für die entsprechende Korrektur verwendet.

Mit dem verzeichniskorrigierten Bild kann eine finale reale Vergrößerung (β=0,5...5 bzw. β=5...25) des Referenz-Zoomsystems für die Verbindung mit einem Referenzobjektiv ermittelt werden.

Eine Zoom-Tabelle 11 wird für die Kombination Referenz-Zoomsystem mit Referenzobjektiv generiert und in einem internen Speicher des Referenz-Zoomsystems gespeichert. Auf dem Referenzobjektiv wird eine verkürzte Zoomtabelle als Kalibrationstabelle 12 (4x33) für den Fit der Verzeichnungskoeffizienten gespeichert.

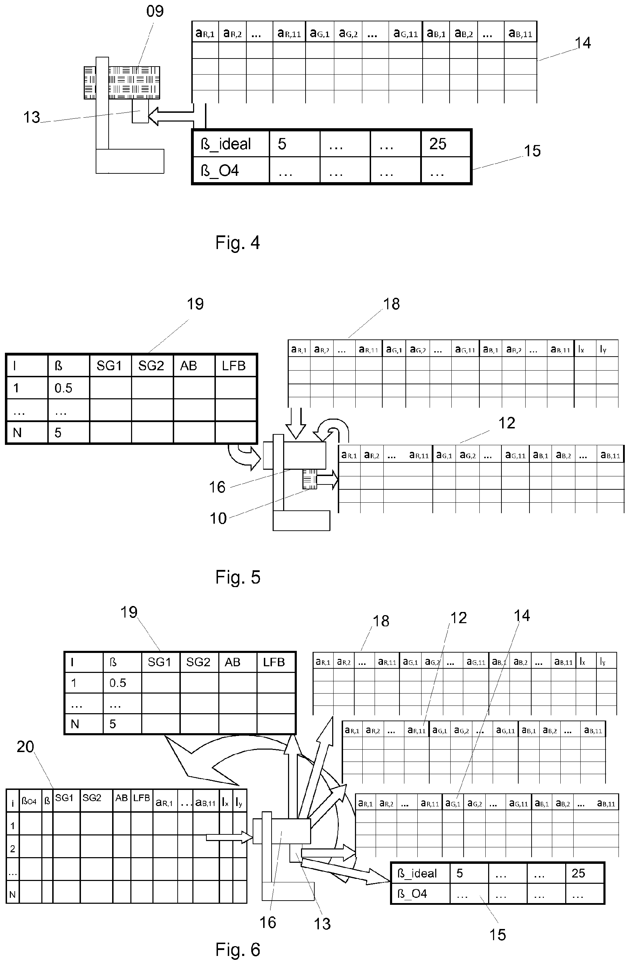

In Fig. 4 ist dargestellt, wie ein beliebiges Objektiv 13 am Referenz-Zoomsystem 09 kalibriert wird.

Es werden mit dem Referenz-Zoomsystem 09 die neun idealen β-Positionen der Modelle angefahren und die tatsächlich abweichende verzeichnungskorrigierte Vergrößerung des Objektivs 13 am Referenz-Zoomsystem 09 ermittelt und als Kalibrierdaten 15 auf dem internen Speicher des Objektivs 13 gespeichert. Die β-Positionen sind dabei die Vegrößerungen, für die die Referenzmuster gefertigt wurden. Optional kann noch der Bildsprung beim Wechsel vom Referenzobjektiv 10 zu dem neuen Objektiv 13 als Vektor auf dem internen Speicher des Objektivs 13 gespeichert werden. Dieser Wert kann später weiterverarbeitet werden.

Die Verzeichnungskorrektur erfolgt über die Idealvergrößerung. Dafür sind in einem internen Speicher des Objektivs in einer Tabelle 14 für vier Idealvergrößerungen je Farbkanal 11 Modellkoeffizienten gespeichert.

Anhand Fig. 5 wird beschrieben, wie ein beliebiges Zoomsystem 16 am Referenzobjektiv 10 kalibriert wird. Es wird die Kalibrationstabelle 12 des Referenzobjektives 10 mit dem Referenz-Zoomsystem für spätere Berechnungen auf dem Prüflingszoom gespeichert. Es erfolgen die Schritte Bestimmung des Invarianzpunktes, Bestimmung der 9 Zoompositionen für fokussierte Abbildung, Abbildung der Kalibrationsmasken für die Zoomkurve, die Verzeichnungskorrektur und die Bildstandskorrektur wie bei Fig. 3 für die Kombination Referenzzoom 09 mit Referenzobjektiv 10 beschrieben. Die Bewegungen der Leuchtfeldblende und der Aperturblende werden ermittelt. Mit der Verzeichniskorrektur entsteht die finale Vergrößerung β an der Verbindung des Referenzobjektives mit dem Zoomsystem.

Das Modell 18 mit den Verzeichnungskoeffizienten $a_{m,n}$ und den Koeffizienten für die Bildstandskorrektur I wird über $\beta_{ideal}$ ermittelt und in einer 4x35 Matrix auf dem Zoomsystem gespeichert.

Eine reduzierte Zoomtabelle 19 mit $\beta_{ideal}$, den Stellungen der beweglichen Linsengruppen 02, 03 bzw. deren korrespondierenden Motorschrittweiten, der Leuchtfeldblende und Aperturblende wird ebenfalls auf dem Zoomsystem gespeichert.

Anhand Fig. 6 wird die Vorgehensweise erläutert, wenn ein beliebiges Zoomsystem 16 mit dem beliebigen Objektiv 13 kalibriert werden soll. Dazu ist festzuhalten, dass alle Zoomsysteme und alle Objektive mit einem Referenz-Gegenstück kalibriert wurden und die entsprechenden Tabellen wie zuvor erläutert, in den jeweiligen internen Speichern gespeichert sind.

Aus dem internen Speicher des Zoomsystems 16 werden die Tabellen bzw. Modelle 12, 18, 19 ausgelesen. Aus dem internen Speicher des Objektives 13 werden die Tabellen 14, 15 ausgelesen.

In der optical engine wird eine Look-Up-Tabelle 20 für die konkrete Kombination aus Zoomsystem 16 und Objektiv 13 erstellt, indem in der Zoomtabelle 19 eine Spalte $\beta_0$ ergänzt wird. Dabei wird die Spalte für die Objektivver-größerung $\beta_O$ durch eine Spline-Interpolation aus der β-Kalibrationstabelle 15 gewonnen. Diese steht zur Steuerung des Zoom und zur Auswertung von Bilddaten zur Verfügung.

Die neuen Verzeichnungskorrekturkoeffizienten werden aus den ermittelten Koeffizienten errechnet als $C\_Z+O_R$ ($[C\_Z_R+O_R]^{-1}$ ($C\_Z_R+O$ (Bilder von Z an O))).

Dazu wird eine Gesamtabbildungskorrektur abstrakt als Hintereinanderausführung einzelner Abbildungsstufen mit zugehöriger Korrektur aufgefasst. Auf die Bilder des Zoomsystems 16 mit dem Objektiv 13 ist die Korrektur der Abbildung des Objektivs 13 am Referenzzoom 9($C\_Z_R+O$)), charakterisiert durch Tabelle 14, anzuwenden. Darauf erfolgt die Anwendung der inversen Korrektur des Referenzobjektivs 10 am Referenzzoom 09 $[C\_Z_R+O_R]^{-1}$, charakte-risiert durch die Kalibrationstabelle 12, und darauf Anwendung der Korrektur des Referenzobjektivs 10 am Zoomsystem 16 $C\_Z+O_R$, charakterisiert durch das Modell 18.

Die Berechnung von Verzeichnungskorrekturkoeffizienten für die Hintereinanderausführung der beschriebenen drei Teilkorrekturen in einem einzigen Verzeichnungskorrekturschritt erfolgt, indem die Bildkoordinaten der Löcher 08 die Korrekturschritte durchlaufen und aus den finalen Koordinaten Koeffizienten der Lageabweichung ermittelt werden, für vorzugweise 9 Vergrößerungen und drei Wellenlängen (Farbkanäle). Die Berechnung der Zoomtabelle erfolgt über gefittete Koeffizienten über ß analog den reduzierten Zoomtabellen.

Die Ermittlung des Verzeichnungskorrekturmodells basiert auf: "The Worst Distortions of Astrometric Instruments and Orthonormal Models for Rectangular Fields of View", Valeri V. Makarov, Daniel R. Veillette, Gregory S. Hennessy, & Benjamin F. Lane; United States Naval Observatory, 3450 Massachusetts Ave. NW, Washington DC.

Für Objektive mit anderen Vergrößerungen, wie beispielsweise 1,6x oder 0,5x werden analog am Referenz-Zoomsystem Verzeichnungskoeffizienten ermittelt und mit dem jeweiligen Standard-β $\beta=\beta_{ideal}$*(32.9/99) bzw. $\beta=\beta_{ideal}$*(32. 9/300) gefittet. Die Vergrößerungs-Transformationstabelle und die Verzeichnungsfit-Koeffizententabelle werden jeweils im internen Speicher des Objektivs 13 gespeichert. Das Erzeugen der Gesamt-Look-Up-Tabelle erfolgt nun genau so, wie zuvor beispielhaft für ein 5x-Objektiv beschrieben wurde. Lediglich die Gesamtvergrößerung wird entsprechend anders berechnet.

Der Fachmann kann die Analogien leicht herstellen und übernehmen.

Es liegt auch im Rahmen der Erfindung, ggf. andere Speicherorte für die Kalibrierdaten des Objektivs und des Zoomsystems zu wählen. Beispielsweise wäre es denkbar, auf dem jeweiligen internen Speicher eine ID zu speichern und die zugehörigen Tabellen in einer zentralen Datenbank abzulegen.

Vorteilhafterweise werden die letzten zehn (oder eine beliebige andere Anzahl) Look-Up-Tabellen der letzten zehn (x) angeschlossenen Objektive in einer History gespeichert. Damit ist das sofortige Arbeiten mit den gekauften Objektiven auch bei häufigerem Wechsel gewährleistet. Selbstverständlich kann die History den erforderlichen Bedingungen angepasst werden und mehr oder weniger als zehn Einträge enthalten.

Die Beschreibung ist beispielhaft für ein System mit zwei Zoombewegungen mit Direktantrieben, einem über dem Zoom variablen Leuchtfeldblenden- und Aperturblendendurchmesser ausgelegt. Diese Einträge sind für die Umsetzung der Idee nicht zwingend notwendig. Für Zoomsysteme ohne diese können entsprechende Einträge entfallen. SG1 und SG2 stehen beispielhaft für Zoomsysteme mit zwei Direktantrieben, stellvertretend für Positionen des Antriebs. Dieser kann mit bekannten technischen Mitteln durch Motorposition, Encoderposition, mechanische Rast oder andersgeartete Geber ersetzt werden.

Der Inhalt der Erfindung ist auch gewahrt, wenn der Inhalt der Look-Up-Tabelle 20 durch eine Zoomtabelle analog 11 ergänzt um Spalte β_O4 und eine reduzierte Zoomtabelle analog 12 realisiert ist.

Bezugszeichenliste

| | |
|---|---|
| 01 | Zoomsystem |
| 02 | erste bewegliche Linsengruppe |
| 03 | zweite bewegliche Linsengruppe |
| 04 | Objekt |
| 05 | Objektiv |
| 06 | Bildsensor |
| 07 | Rasterreferenzobjekt |
| 08 | Loch |
| 09 | Referenz-Zoomsystem |
| 10 | Referenzobjektiv |
| 11 | Zoomtabelle |
| 12 | Kalibrationstabelle |
| 13 | Objektiv |
| 14 | Tabelle |
| 15 | Kalibrationstabelle |
| 16 | Zoomsystem |
| 17 | - |
| 18 | Modell |
| 19 | reduzierte Zoomtabelle |
| 20 | Look-Up-Tabelle |

**Patentansprüche**

1. Verfahren zur Bildaufnahme mit Hilfe eines Digitalmikroskops, das zumindest ein motorisiertes oder codiertes Zoomsystem (16), ein Objektiv (13), einen Bildsensor (06) und eine Bildverarbeitungseinheit umfasst, folgende Schritte umfassend:

   - Ermitteln von Kalibrierdaten $D_{ZRef}$ des Zoomsystems (16) mit einem Referenzobjektiv (10) und Speichern der Kalibrierdaten $D_{ZRef}$ in einem internen Speicher des Zoomsystems (16), wobei die Kalibrierdaten $D_{ZRef}$ des Zoomsystems (16) eine Zoomtabelle (19) mit Werten eines korrigierten Zoomwertes umfassen;
   - Ermitteln von Kalibrierdaten $D_{ORef}$ des Objektivs (13) mit einem Referenz-Zoomsystem (09) und Speichern der Kalibrierdaten $D_{ORef}$ in einem internen Speicher des Objektivs (13), wobei die Kalibrierdaten $D_{ORef}$ des Objektivs (13) Vergrößerungskorrekturkoeffizienten umfassen;
   - Auslesen der internen Speicher des Zoomsystems (16) und des Objektivs (13) und Anwenden einer digitaloptischen Korrektur eines von Bildsensor erfassten Bildes unter Verwendung der Kalibrierdaten $D_{ZRef}$ und $D_{ORef}$.

2. Verfahren nach Anspruch 1, **dadurch gekennzeichnet, dass** zuerst eine Kalibrierung des Referenz-Zoomsystems (09) mit dem Referenzobjektiv (10) erfolgt, wobei eine Kalibrationstabelle (12) auf dem Referenzobjektiv und eine Zoom-Tabelle (11) auf dem Referenz-Zoomsystem gespeichert werden.

3. Verfahren nach Anspruch 1 oder 2, **dadurch gekennzeichnet, dass** die Kalibrierdaten $D_{ZRef}$ eine reale Zoomkurve und ein Abbildungsfehlermodell mit Korrekturkoeffizienten umfassen, wobei eine reale Vergrößerung aus einer verzeichniskorrigierten Abbildung ermittelt wird.

4. Verfahren nach einem der Ansprüche 1 bis 3, **dadurch gekennzeichnet, dass** die Kalibrierdaten $D_{ORef}$ eine tatsächlich abweichende verzeichnungskorrigierte Vergrößerung $\beta_O$ des Objektivs (13) für bestimme Idealvergrößerungen $\beta_{ideal}$ des Zoomsystems (09) umfassen.

5. Verfahren nach Anspruch 1, **dadurch gekennzeichnet dass** die Kombination der Kalibrierdaten dadurch erfolgt, dass

   - eine Korrektur der Abbildung des Objektivs (13) am Referenz-Zoomsystem (09) erfolgt;
   - eine inverse Korrektur des Referenz-Zoomsystems (09) am Referenzobjektiv (10) auf die zuvor ermittelten Daten erfolgt; und dass
- eine Korrektur der Abbildung des Referenzobjektivs (10) am Zoomsystem (16) auf die zuvor ermittelten Daten erfolgt.

6. Verfahren nach einem der Ansprüche 1-5, **dadurch gekennzeichnet, dass** die Kalibrierdaten $D_{ZRef}$ des Zoomsystem (16) Korrekturkoeffizienten zur Verzeichnungskorrektur umfassen.

7. Verfahren nach einem der Ansprüche 1-6, **dadurch gekennzeichnet, dass** die Kalibrierdaten $D_{ZRef}$ des Zoomsystem (16) Korrekturkoeffizienten zur Bildstandskorrektur umfassen.

8. Digitalmikroskop, umfassend zumindest ein motorisiertes oder codiertes Zoomsystem (16), ein Objektiv (13), einen Bildsensor (06) und eine Bildverarbeitungseinheit, **dadurch gekennzeichnet, dass** in einem internen Speicher des Zoomsystems (16) Kalibrierdaten $D_{ZRef}$ und in einem internen Speicher des Objektivs (13) Kalibrierdaten $D_{ORef}$ gespeichert sind, die jeweils Korrekturkoeffizienten umfassen, wobei die Bildverarbeitungseinheit zur Durchführung des Verfahrens nach einem der Ansprüche 1-7 eingerichtet ist.

**Claims**

1. Method for recording an image using a digital microscope which comprises at least a motorized or encoded zoom system (16), an objective (13), an image sensor (06) and an image processing unit, comprising the following steps:

   - ascertaining calibration data $D_{ZRef}$ of the zoom system (16) with a reference objective (10) and storing the calibration data $D_{ZRef}$ in an internal memory of the zoom system (16), wherein the calibration data $D_{ZRef}$ of the zoom system (16) comprise a zoom table (19) with values of a corrected zoom value;
   - ascertaining calibration data $D_{ORef}$ of the objective (13) with a reference zoom system (09) and storing the calibration data $D_{ORef}$ in an internal memory of the objective (13), wherein the calibration data $D_{ORef}$ of the objective (13) comprise magnification correction coefficients;
   - reading the internal memories of the zoom system (16) and of the objective (13) and applying a digital-optical correction of an image captured by an image sensor with the calibration data $D_{ZRef}$ and $D_{ORef}$.

2. Method according to Claim 1, **characterized in that** a calibration of the reference zoom system (09) with the reference objective (10) is performed first, wherein a calibration table (12) is stored on the reference objective and a zoom table (11) is stored on the reference zoom system.

3. Method according to Claim 1 or 2, **characterized in that** the calibration data $D_{ZRef}$ comprise a real zoom curve and an aberration model with correction coefficients, wherein a real magnification is ascertained from a distortion-corrected image.

4. Method according to any one of Claims 1 to 3, **characterized in that** the calibration data $D_{ORef}$ comprise an actual deviating, distortion-corrected magnification $\beta_O$ of the objective (13) for specific ideal magnifications $\beta_{ideal}$ of the zoom system (09) .

5. Method according to Claim 1, **characterized in that** the calibration data are combined by virtue of

   - there being a correction of the image of the objective (13) on the reference zoom system (09);
   - there being an inverse correction of the reference zoom system (09) on the reference objective (10) to the previously ascertained data; and
   - there being a correction of the image of the reference objective (10) on the zoom system (16) to the previously ascertained data.

6. Method according to any one of Claims 1-5, **characterized in that** the calibration data $D_{ZRef}$ of the zoom system (16) comprise correction coefficients for correcting the distortion.

7. Method according to any one of Claims 1-6, **characterized in that** the calibration data $D_{ZRef}$ of the zoom system (16) comprise correction coefficients for correcting the image steadiness.

8. Digital microscope, comprising at least a motorized or encoded zoom system (16), an objective (13), an image sensor (06) and an image processing unit, **characterized in that** calibration data $D_{ZRef}$ are stored in an internal memory of the zoom system (16) and calibration data $D_{ORef}$ are stored in an internal memory of the objective (13), which calibration data in each case comprise correction coefficients, wherein the image processing unit is set up to carry out the method according to any one of Claims 1-7.

**Revendications**

1. Procédé de capture d'image à l'aide d'un microscope numérique, lequel comporte au moins un système de zoom (16) motorisé ou codé, un objectif (13), un capteur d'image (06) et une unité de traitement d'image, comprenant les étapes suivantes :

   - détermination de données d'étalonnage $D_{ZRef}$ du système de zoom (16) avec un objectif de référence (10) et mémorisation des données d'étalonnage $D_{ZRef}$ dans une mémoire interne du système de zoom (16), les données d'étalonnage $D_{ZRef}$ du système de zoom (16) comprenant une table de zoom (19) avec les valeurs d'une valeur de zoom corrigée ;
   - détermination de données d'étalonnage $D_{ORef}$ de l'objectif (13) avec un système de zoom de référence (09) et mémorisation des données d'étalonnage $D_{ORef}$ dans une mémoire interne de l'objectif (13), les données d'étalonnage $D_{ORef}$ de l'objectif (13) comprenant des coefficients de correction de l'agrandissement ;
   - lecture des mémoires internes du système de zoom (16) et de l'objectif (13) et application d'une correction optique numérique d'une image capturée par le capteur d'image en utilisant les données d'étalonnage $D_{ZRef}$ et $D_{ORef}$.

2. Procédé selon la revendication 1, **caractérisé en ce qu'**un étalonnage du système de zoom de référence (09) est tout d'abord effectué avec l'objectif de référence (10), une table d'étalonnage (12) étant mémorisée sur l'objectif de référence et une table de zoom (11) sur le système de zoom de référence.

3. Procédé selon la revendication 1 ou 2, **caractérisé en ce que** les données d'étalonnage $D_{ZRef}$ comportent une courbe de zoom réelle et un modèle d'erreur de représentation avec des coefficients de correction, un agrandissement réel étant déterminé à partir d'une représentation corrigée en distorsion.

4. Procédé selon l'une des revendications 1 à 3, **caractérisé en ce que** les données d'étalonnage $D_{ORef}$ comportent un agrandissement $\beta_O$ effectif différent corrigé en distorsion de l'objectif (13) pour certains agrandissements idéaux $\beta_{ideal}$ du système de zoom (09).

5. Procédé selon la revendication 1, **caractérisé en ce que** la combinaison des données d'étalonnage s'effectue **en ce que**

   - une correction de la représentation de l'objectif (13) est effectuée au niveau du système de zoom de référence (09) ;
   - une correction inverse du système de zoom de référence (09) est effectuée au niveau de l'objectif de référence (10) sur les données déterminées précédemment ; et **en ce que**
   - une correction de la représentation de l'objectif de référence (10) est effectuée au niveau du système de zoom (16) sur les données déterminées précédemment.

6. Procédé selon l'une des revendications 1 à 5, **caractérisé en ce que** les données d'étalonnage $D_{ZRef}$ du système de zoom (16) comportent des coefficients de correction destinés à la correction de la distorsion.

7. Procédé selon l'une des revendications 1 à 6, **caractérisé en ce que** les données d'étalonnage $D_{ZRef}$ du système de zoom (16) comportent des coefficients de correction destinés à la correction de la stabilité de l'image.

8. Microscope numérique, comportant au moins un système de zoom (16) motorisé ou codé, un objectif (13), un capteur d'image (06) et une unité de traitement d'image, caractérisé en ce des données d'étalonnage $D_{ZRef}$ sont mémorisées dans une mémoire interne du système de zoom (16) et des données d'étalonnage $D_{ORef}$ sont mémorisées dans une mémoire interne de l'objectif (13), lesquelles comportent respectivement des coefficients de correction, l'unité de traitement d'image étant conçue pour mettre en œuvre un procédé selon l'une des revendications 1 à 7.

Fig. 1

Fig. 2

Fig. 3

09

| $a_{R,1}$ | $a_{R,2}$ | ... | $a_{R,11}$ | $a_{G,1}$ | $a_{G,2}$ | ... | $a_{G,11}$ | $a_{B,1}$ | $a_{B,2}$ | ... | $a_{B,11}$ |
|---|---|---|---|---|---|---|---|---|---|---|---|
| | | | | | | | | | | | |
| | | | | | | | | | | | |
| | | | | | | | | | | | |

14

13

| ß_ideal | 5 | ... | ... | 25 |
|---|---|---|---|---|
| ß_O4 | ... | ... | ... | ... |

15

Fig. 4

19

| I | ß | SG1 | SG2 | AB | LFB |
|---|---|---|---|---|---|
| 1 | 0.5 | | | | |
| ... | ... | | | | |
| N | 5 | | | | |

18

| $a_{R,1}$ | $a_{R,2}$ | ... | $a_{R,11}$ | $a_{G,1}$ | $a_{G,2}$ | ... | $a_{G,11}$ | $a_{B,1}$ | $a_{B,2}$ | ... | $a_{B,11}$ | $I_x$ | $I_y$ |
|---|---|---|---|---|---|---|---|---|---|---|---|---|---|
| | | | | | | | | | | | | | |
| | | | | | | | | | | | | | |

16

10

12

| $a_{R,1}$ | $a_{R,2}$ | ... | $a_{R,11}$ | $a_{G,1}$ | $a_{G,2}$ | ... | $a_{G,11}$ | $a_{B,1}$ | $a_{B,2}$ | ... | $a_{B,11}$ |
|---|---|---|---|---|---|---|---|---|---|---|---|
| | | | | | | | | | | | |
| | | | | | | | | | | | |

Fig. 5

19

| I | ß | SG1 | SG2 | AB | LFB |
|---|---|---|---|---|---|
| 1 | 0.5 | | | | |
| ... | ... | | | | |
| N | 5 | | | | |

18    12    14

| $a_{R,1}$ | $a_{R,2}$ | ... | $a_{R,11}$ | $a_{G,1}$ | $a_{G,2}$ | ... | $a_{G,11}$ | $a_{B,1}$ | $a_{B,2}$ | ... | $a_{B,11}$ | $I_x$ | $I_y$ |
|---|---|---|---|---|---|---|---|---|---|---|---|---|---|
| | | | | | | | | | | | | | |
| | | | | | | | | | | | | | |

| $a_{R,1}$ | $a_{R,2}$ | ... | $a_{R,11}$ | $a_{G,1}$ | $a_{G,2}$ | ... | $a_{G,11}$ | $a_{B,1}$ | $a_{B,2}$ | ... | $a_{B,11}$ |
|---|---|---|---|---|---|---|---|---|---|---|---|
| | | | | | | | | | | | |
| | | | | | | | | | | | |

20

| i | ß_O4 | ß | SG1 | SG2 | AB | LFB | $a_{R,1}$ | ... | $a_{B,11}$ | $I_x$ | $I_y$ |
|---|---|---|---|---|---|---|---|---|---|---|---|
| 1 | | | | | | | | | | | |
| 2 | | | | | | | | | | | |
| ... | | | | | | | | | | | |
| N | | | | | | | | | | | |

| $a_{R,1}$ | $a_{R,2}$ | ... | $a_{R,11}$ | $a_{G,1}$ | $a_{G,2}$ | ... | $a_{G,11}$ | $a_{B,1}$ | $a_{B,2}$ | ... | $a_{B,11}$ |
|---|---|---|---|---|---|---|---|---|---|---|---|
| | | | | | | | | | | | |
| | | | | | | | | | | | |

| ß_ideal | 5 | ... | ... | 25 |
|---|---|---|---|---|
| ß_O4 | ... | ... | ... | ... |

16    13

15

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10225193 A1
- DE 10114757 B4
- DE 102010025888 A1
- US 20080239107 A1
- US 20090268078 A1
- EP 2345920 A1
- DE 102010030637 A1